(19) Europäisches Patentamt
European Patent Office
Office européen des brevets

(11) Publication number: **0 481 603 A1**

(12) **EUROPEAN PATENT APPLICATION**

(21) Application number: **91308501.5**

(22) Date of filing: **18.09.91**

(51) Int. Cl.$^5$: **B01J 41/04**, B01J 41/14, C13D 3/14

(30) Priority: **15.10.90 US 597947**

(43) Date of publication of application:
**22.04.92 Bulletin 92/17**

(84) Designated Contracting States:
**AT BE DE DK ES FR GB IT LU NL**

(71) Applicant: **THE DOW CHEMICAL COMPANY**
**2030 Dow Center Abbott Road**
**Midland, MI 48640(US)**

(72) Inventor: **Morohashi, Masayuki**
**5344-649 Gonda, Kurabuchi-Mura**
**Gunma-Gun, Gunma-ken 370-34(JP)**
Inventor: **Dhingra, Yog Raj**
**6101 Sturgeon Creek, Parkway, Midland**
**Michigan 48640(US)**
Inventor: **Lindy, Lowell B.**
**4516 Linden Drive, Midland**
**Michigan 48640(US)**
Inventor: **Norman, Seth I.**
**5006 Barto, Midland**
**Michigan 48640(US)**
Inventor: **Gisch, Daryl J.**
**4911 Sturgeon Creek, Parkway, Midland**
**Michigan 48640(US)**

(74) Representative: **Allard, Susan Joyce et al**
**BOULT, WADE & TENNANT, 27 Furnival Street**
**London EC4A 1PO(GB)**

(54) **Separation of weak organic acids from liquid mixtures.**

(57) Ion-exchange resins and a process employing the resins are provided for separating low molecular weight weak organic acids from liquid mixtures. Exemplary of such acids are those having eight carbon atoms or less such as formic acid, lactic acid, acetic acid, maleic acid, fumaric acid, citric acid and the like. The resins are gel-type, weak-base, anion-exchange resins which are characterized by their being prepared from lightly cross-linked copolymer beads which are subsequently post-polymerization cross-linked in the presence of a Friedel-Crafts catalyst. When functionalized with weak-base exchange groups, the resins exhibit high operating capacity with respect to retention of the weak organic acids. The process may be used to purify, for example, sugar solutions used in preparing foodstuffs like high fructose corn syrups and fruit juices. In another embodiment, the process recovers the weak organic acids from liquid mixtures.

EP 0 481 603 A1

The present invention concerns separation of weak organic acids from liquid mixtures containing them by use of certain gel-type, weak-base, anion-exchange resins. In particular, the invention concerns a process employing such resins for purifying sugar solutions of weak organic acids which adversely affect the taste and quality of food products made therefrom.

Ion-exchange resins are used widely for purification of various substances. Ion-exchange resins have a plurality of functional groups attached thereto having anions or cations capable of being exchanged for ions of the same charge when the resin is in contact with a solution. Such resins have generally been used in water treatment and purification, food preparation, pharmaceutical manufacturing, chemical processing, metal extraction, and so on, as is generally discussed by Wheaton et al. in, "Ion Exchange", 13 Ency. Chem. Tech. pp. 678-704 (3rd Ed. 1981).

Of particular commercial importance is the purification of aqueous sugar solutions employed in the production of foodstuffs, such as high fructose corn syrup ("HFCS") or fruit juices. Sugars like glucose, fructose, and sucrose inherently degrade by bacteriological action to produce lactic acid, malic acid, and other weak organic acids. If these weak organic acids are not removed from the sugar solution, the taste and/or color of foodstuffs produced therefrom may be adversely affected.

Industry has purified sugar solutions by passing them through one or more columns loaded with macroporous, weak-base, anion-exchange resins. The term "macroporous" (also referred to as macroreticular) is well-known and, in general, refers to ion-exchange resins prepared from copolymer beads having regions of densely packed polymer chains exhibiting molecular-sized porosity which are separated by copolymer-free voids, often referred to as mesopores (50-200 Å) and macropores (>200 Å). In contrast, gel-type, or microporous, resins have pores generally of molecular-size (generally less than about 50Å). Macroporous and microporous resins are further described in U.S. Patents 4,224,415 and 4,382,124.

Due to increased pore size and porosity, macroporous resins are generally more permeable to a given solution when compared to a gel resin. Sugar solutions commonly used in industry are highly concentrated and viscous, which previously made the more permeable macroporous resins practical for such applications. Standard gel-type resins could not be used, because they are susceptible to fouling by organic impurities, such as color bodies, and are not easily regenerated.

Although a conventional macroporous, weak-base, anion-exchange resin does remove weak organic acids from sugar solutions, the macroporous characteristic inherently results in the need for frequent regeneration. The presence of porous voids decreases the amount of copolymer available for functionalization, thereby resulting in decreased ion-exchange capacity when compared to gel resins. In general, resins having greater ion-exchange capacities will not exhaust as quickly and, thus, require less frequent regeneration. Conventional weak-base macroporous resins generally do not have a high capacity for retaining weak organic acids which also leads to frequent regeneration.

Reduction in the amount of regeneration is desirable for commercial operation of ion-exchange processes, especially those which purify sugar solutions. Prior to contacting the ion exchange resin with the regenerating agent, it is necessary to remove essentially all of the sugar solution from the resin bed. This is accomplished by passing effective quantities of water over the resin in order to "sweeten-off" the sugar solution within the resin bed. Conversely, after regeneration concentrated sugar solutions introduced to the resin bed become diluted due to the presence of water therein, a procedure termed "sweeten-on" by those in the industry. In either case, the resulting diluted sugar effluent is known as "sweet-water" and it contains a considerable amount of potentially recoverable sugar.

Sweet-water is generally recycled back as a dilution medium to other process steps. Typically, there is substantially more sweet-water generated than can be utilized for dilution purposes. The excess sweet-water normally requires concentrating, i.e., removal of a substantial amount of water, during some step in the refining process. This is generally accomplished by evaporation. Any sweet-water which is too dilute to be economically subjected to such an evaporation process is typically discarded and, thereby, results in loss of the potentially recoverable sugar.

Frequent regeneration of the ion-exchange resin is economically undesirable for a commercial process. Evaporation of water during sweet-water concentration is an expensive unit operation due to energy costs. As such, it is desirable to reduce the amount of sweet-water and its associated evaporation expense without detrimentally affecting sugar quality. Regeneration also requires the purchase of chemicals, such as sodium hydroxide, to regenerate the resin and it is inherently inefficient, since it requires taking process equipment out-of-operation. Thus, it is desirable to increase the operating capacity of the resin to minimize the amount of regeneration needed.

Many industries produce product streams containing significant amounts of weak organic acids. In particular, some organic acids like lactic acid and citric acid may be produced by a fermentation process. If these acids could be recovered from such product streams efficiently, they could be used later in preparing

food supplements.

Accordingly, it is desirable to provide a novel gel resin having improved exchange capacity for weak organic acids when compared to conventional macroporous resins. Such a gel resin results in a more economical and efficient process when employed in separating weak organic acids from liquid mixtures for purification purposes, or to subsequently recover the weak organic acids for further processing.

The above-described objects and advantages are obtained, in part, by a novel gel-type, weak-base, anion-exchange resin comprising a copolymer bead matrix having a core/shell morphology. The copolymer bead matrix comprises at least one monovinyl aromatic monomer and a cross-linking monomer in proportions sufficient to yield a copolymer bead having an apparent cross-link density of less than 4 weight percent as determined by toluene swell techniques. The copolymer bead matrix is post-polymerization cross-linked in the presence of a Friedel-Crafts catalyst and functionalized by amination with an aliphatic secondary amine. The functionalized resin has a salt splitting capacity of at least 5 percent of the total exchange capacity for the resin.

Another aspect of the invention is an improved process for separating low molecular weight weak organic acids from liquid mixtures containing them. The process comprises contacting the liquid mixture with the gel-type, weak-base, anion-exchange resin previously described to selectively retain the weak organic acids therein. The resin is more efficient in recovering the weak organic acids from liquid mixtures when compared to conventional macroporous weak-base resins.

A further aspect is recovering the low molecular weight weak organic acids once they are retained. Recovery is conducted by elution with an effective amount of an acidic medium. After elution, the weak organic acids in the eluted acidic medium may be reacted in a subsequent process step, or recovered in a more purified form by conventional unit operations, such as distillation and evaporation.

Figure 1 is a schematic drawing of apparatus used in connection with Examples 1-7 and Comparative Example A.

Figure 2 is a graph of pH for glucose solution effluent from an ion-exchange column versus the number of bed volumes ("BV") of glucose solution passing through the column. The series of curves in Fig. 2 represent results obtained in connection with Examples 1, 3, and 7, as well as Comparative Example A, respectively. The purely dotted line represents results for Comparative Example A, the purely dashed line represents results for Example 3, the line having alternating single dots and dashes represents results for Example 1, and the line having two dots alternating with a dash represents results for Example 7.

In this invention, certain ion-exchange resins are used to separate weak organic acids of low molecular weight from liquid mixtures containing them as a dilute component. The benefit of this invention, i.e., a high weak organic acid removal capacity relative to conventional macroporous, weak-base, anion-exchange resins, is largely independent of the composition of the liquid mixture. For example, the liquid mixture may be a solution of various sugars like glucose, fructose, and dextrose. The liquid mixture may also be a product, or a byproduct, of a fermentation process used to prepare various food products; chemical compounds like citric acid, gluconic acid and sodium gluconate; synthetic biopolymers; synthetic amino acids; and pharmaceuticals.

Examples of suitable liquid mixtures include mixtures of organic alcohols, organic amines, organic glycols, mono-, di- and polysaccharides, proteins, amino acids, and sugars (as in the production of sugar from beet molasses) which contain minor amounts of weak organic acids therein. Of particular interest are sugar solutions used in preparing foodstuffs. Examples of such sugar solutions include carbohydrate solutions derived from corn starch, like corn syrup, high fructose corn syrup, dextrose, and sorbitol; sucrose, beet sugar, cane sugar, palm sugar, and maple sugar; fruit juices, either natural or processed, such as pear, apple, grape, and pineapple mill juices; sugar solutions derived from sorgum; and high fructose syrups derived from tapioca, inulin, and potato starch.

The lower weak organic acids of interest are advantageously mono- or polycarboxylic acids having about eight carbon atoms or less. Examples of such weak organic acids include acetic acid, lactic acid, gluconic acid, glutaric acid, glutamic acid, formic acid, fumaric acid, citric acid, malic acid, maleic acid, and mixtures thereof. Preferred weak organic acids have 6 carbon atoms or less, while the most preferred weak organic acids have 4 carbon atoms or less.

As previously mentioned, the mixture containing the weak organic acids must be a liquid. Whenever one or more components of a mixture to be separated is a solid at the temperature of the separation, a solvent for such components may be used, provided that the solvent does not undesirably interfere with the separation or react with the ion-exchange resin employed. Preferably, the solvent used is water, a polar organic solvent, or other solvent miscible with water, as polar solvents swell the resin, thereby facilitating diffusion of the mixture components into and out of the resin beads. Non-polar solvents tend to be excluded from the resin beads and reduce their effectiveness. In preferred embodiments, the liquid mixture is a

solution, and more preferably an aqueous solution.

In general, the gel-type, weak-base, anion-exchange resins employed in conducting the process of the invention are prepared by conventional methods. Numerous anion-exchange resins and methods for making them are known in the art, and for instance, are generally described in U.S. Patents 2,642,417; 2,960,480; 2,597,492; 2,597,493; 3,311,602; 2,632,000; 2,632,001 and 2,992,544, as well as by Helfferich in Ion Exchange, (McGraw-Hill 1962) at pps. 47-58.

The weak-base gel resins are prepared by functionalizing a copolymer bead matrix. The copolymer beads are prepared by suspension polymerization of a mixture which includes a monovinyl aromatic monomer like styrene, a cross-linking monomer such as divinylbenzene, and a free-radical polymerization initiator. Thereafter, the copolymer bead matrix is haloalkylated by reaction with a haloalkylation agent, typically chloromethyl methyl ether, in the presence of a Friedel-Crafts catalyst. After haloalkylation, the beads may be reacted with an aliphatic secondary amine, like dimethylamine, to introduce weak-base functional groups.

The resins are characterized by their preparation from copolymer beads having a small amount of cross-linking monomer therein which are post-polymerization cross-linked in the presence of a Friedel-Crafts catalyst. The term "small amount" refers to an amount of cross-linking monomer sufficient to yield an apparent cross-link density of less than 4 percent by weight as determined by toluene swell techniques referenced hereinafter. The resins are also characterized by a high operating capacity, as described hereinafter, when employed in separating low molecular weight weak organic acids from the liquid mixtures.

The terms "actual cross-link density" and "apparent cross-link density" are terms which are used to compare the relative amounts of cross-linking monomer in copolymer beads. The term "actual cross-link density" refers to the proportion of polyvinyl monomer used in preparing the copolymer beads, expressed as a weight percentage of the monomers used. Actual cross-link density can also be determined by analytical techniques such as infrared spectroscopy, pyrolysis gas chromatography, and nuclear magnetic resonance. Apparent cross-link density may be determined by swelling the copolymer beads with toluene prior to functionalization (generally referred to herein as "toluene swell techniques") and is described in U.S. Patent 4,564,644.

Copolymer beads used to make resins suitable for use in the process of the invention may be prepared by suspension polymerization methods generally known in the art. Suitable polymerization techniques include, for example, a one-step polymerization process described by Helfferich, in Ion Exchange, at pages 35-36, wherein a single monomer mixture is suspension polymerized to produce copolymer beads. Such a one-step process generally produces copolymer beads having a broad bead size distribution. The copolymer beads are preferably formed by a multi-stage polymerization process as described hereinafter.

A multi-stage polymerization, also known as a "seeded" polymerization, adds monomers in two or more increments, each increment comprising at least 5 percent, and preferably at least 10 percent of the weight of the monomers. Each increment is followed by complete or substantial polymerization of the monomers therein before adding a subsequent increment. These so-called seeded polymerizations, as well as continuous or semi-continuous staged polymerizations, are described in U.S. Patents 4,419,245 and 4,564,644.

A multi-stage polymerization is advantageously and preferably conducted as a suspension polymerization process, wherein the monomers are dispersed as a plurality of droplets in a continuous aqueous phase and polymerize therein. In this process, staged polymerization is readily accomplished by forming a suspension of an initial increment of monomers, wholly or partially polymerizing the same, and then adding the remaining monomers in one or more additional increments. Each increment may be added at once, or continuously. Due to the insolubility of the monomers in the aqueous phase and their solubility in the copolymer particles, the monomers migrate to the copolymer particles, are imbibed thereby and polymerize therein. The multi-stage polymerization techniques can vary in terms of the amount of monomers used for each stage, the proportion of cross-linking monomer used in each stage, and the conditions under which the monomers are added in each stage.

In a preferred multi-staged process, the last polymerization stage employs a monomer mixture containing substantially no free-radical initiator. This mixture, which preferably comprises 10 to 80, and more preferably 25 to 75 weight percent of the final copolymer particles, is added to the suspension under polymerization conditions. The copolymer particles formed in earlier stages contain a source of free radicals so that, upon migration to the copolymer particles, the monomer mixture polymerizes therein. Such a free-radical source may be previously imbibed initiator, or the residue of a partially polymerized monomer mixture from a preceding polymerization stage. Such a process is described in U.S Patent 4,564,644.

In a preferred multi-staged process, the copolymer beads are prepared by swelling seed copolymer particles in a first step with a first monomer mixture having, in terms of weight percent of the monomer

mixture, from 0 to 6, preferably 0.5 to 4, and more preferably 1 to 3 weight percent of a cross-linking monomer, the balance being at least one monovinyl aromatic monomer and an effective amount of a free-radical initiator. The swollen seed copolymer particles are then partially polymerized with the first monomer mixture. The seed particles advantageously comprise from 10 to 70, and preferably 25 to 60 weight percent of the final product copolymer bead and have a relatively low, i.e., from 0.1 to 2 and preferably 0.2 to 1.5 weight percent of a cross-linking monomer. The first monomer mixture is advantageously polymerized in this stage to from 20 to 90, and preferably from 50 to 75 percent conversion. Thereafter, a second monomer mixture is added continuously to the suspended seed particles under polymerization conditions such that the monomers are imbibed by the particles and polymerize therewith. The second monomer mixture contains, in terms of weight percentage of the mixture, from 0 to 4, preferably 0.25 to 3, and more preferably 0.5 to 2 weight percent of cross-linking monomer, with the balance of the second monomer mixture being at least one monovinyl aromatic monomer and substantially no free radical initiator.

Copolymer beads formed by a multi-staged process exhibit a core/shell morphology which is more fully described in U.S. Patent 4,564,644. Generally, the term "core/shell morphology" means that the polymeric structure of the copolymer bead varies with the distance from the center of the bead. For example, the changes in polymeric structure may be gradual and, thus, give rise to a bead having a gradient of polymeric structure along any radius thereof. Alternatively, the change in polymeric structure may be relatively abrupt at some point along the radius from the center of the bead, thereby yielding a bead having a substantially distinct inner core of one polymeric structure and a substantially distinct outer shell of another polymeric structure. In either case, the terms "core" and "shell" generally refer to the polymeric structure of the inner and outer portions of the bead, respectively, and do not necessarily imply a sharp interface between the core or shell. Preferred copolymer beads have a shell containing an average proportion of cross-linking monomer which is less than or equal to the average proportion of cross-linking monomer in the core.

The monomers employed herein are addition polymerizable monovinyl aromatic compounds and any addition polymerizable polyvinyl compound which may act as a crosslinking monomer. Such monomers are well known and reference is made to Polymer Processes, edited by Calvin E. Schildknecht, published in 1956 by Interscience Publishers, Inc., New York, Chapter III. Of particular interest are water-insoluble monomers including monovinyl aromatics such as styrene, vinyl naphthalene, alkyl-substituted styrenes (particularly monoalkyl-substituted styrenes such as vinyltoluene and ethylvinylbenzene) and halo-substituted styrenes such as bromo- or chlorostyrene, the polyvinyl aromatics such as divinylbenzene, divinyltoluene, divinylxylene, divinylnaphthalene, trivinylbenzene, divinyldiphenylether, and divinyldiphenylsulfone; esters of $\alpha,\beta$-ethylenically unsaturated carboxylic acids, such as polyvinyl acrylic or methacrylic acids, and mixtures of one or more of said monomers. Preferred monomers include styrene or a mixture of styrene with a monoalkyl- or halo-substituted styrene, and polyvinyl aromatics like divinylbenzene. The above-described monomers are suitably used in any stage of the polymerization process, as well as in the preparation of seed particles. The monomers in a polymerization stage may be the same or different as those used in other stages.

The free-radical initiator may be any of a diverse number of conventional initiators well known for polymerization of vinyl monomers. Representative initiators are UV radiation and chemical initiators including azo compounds such as azobisisobutyronitrile; peroxygen compounds such as benzoyl peroxide, t-butyl peroctoate, t-butyl perbenzoate and isopropylpercarbonate. Other suitable initiators are disclosed in U.S. Patents 4,192,921; 4,246,386; and 4,283,499.

The free-radical initiator is employed in an effective amount sufficient to cause the copolymerization of the monomeric components of a monomer mixture. An effective amount will generally vary depending on a variety of factors including the type of initiator employed, and the type and proportion of monomers being polymerized. Generally, the initiator is employed in amounts from 0.02 to 1, and preferably from 0.05 to 0.5 weight percent based on the total weight of the monomer mixture.

The gel-type copolymer beads formed as described have an apparent cross-link density of less than 4 weight percent of cross-linking monomer as measured by toluene swell techniques. Preferred copolymer beads have an apparent cross-link density of from 0.5 to 3 weight percent, and more preferably from 1 to 2.5 weight percent crosslinking monomer as determined by toluene swell techniques.

Post-polymerization cross-linking is advantageously conducted during haloalkylation of the copolymer beads. Other methods for introducing post-polymerization crosslinking are known, such as the techniques described in East German Patent DD 249,274 A1. However, it is most advantageous to introduce methylene bridging during haloalkylation, as it reduces the number of resin processing steps. In general, the copolymer beads are preferably haloalkylated by first swelling the copolymer beads with a haloalkylating agent and an effective amount of a Friedel-Crafts catalyst. The haloalkylating agent typically has the

Friedel-Crafts catalyst dissolved therein. The swollen copolymer beads are then heated to a temperature sufficient to react the haloalkylating agent with the copolymer beads and the temperature is thereafter maintained until achieving a desired degree of reaction. Methods for haloalkylating copolymer particles, in general, are known. Illustrative of such are U.S. Patents 2,642,417; 2,960,480; 2,597,492; 2,597,493; 3,311,602; 2,632,000; 2,632,001 and 2,992,544 and Helfferich, supra, at pages 52-53. In preparing the weak-base, anion-exchange resin, the copolymer beads are advantageously haloalkylated, preferably halomethylated, most preferably chloromethylated.

The temperature at which haloalkylation is conducted is important as it controls the degree of cross-linking in the beads. Although not completely understood, it is believed that methylene bridging forms between individual polymer chains during post-polymerization cross-linking. The methylene bridging increases the permeability of the resulting gel resin. It is also believed that such methylene bridging promotes formation of salt splitting capacity during functionalization of the haloalkylated beads with weak-base groups.

The term "salt splitting capacity" as used herein refers to formation of randomly located amine bridges between individual polymer chains. Where chloromethylated copolymer beads are functionalized by reaction with dimethylamine, such amine bridges are represented by the formula:

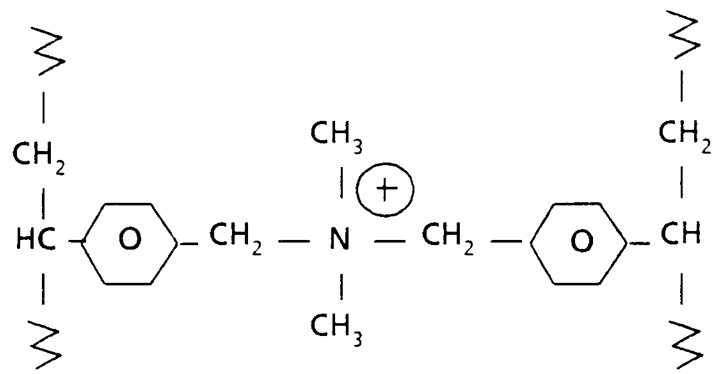

Similar nitrogen bridging forms by use of other aliphatic secondary amines as described hereinafter. The amine bridging provides exchange sites for retention of weak organic acids.

In general, suitable temperatures employed for haloalkylation are from 46 °C to 59 °C. A preferred temperature for haloalkylation is from 50 °C to 54 °C, as resins prepared from such copolymer beads generally have an adequate amount of salt splitting capacity for retaining weak organic acids. Temperatures below 46 °C are generally undesired, because the amount of methylene bridging which occurs is inadequate to induce sufficient salt splitting capacity. Temperatures above 59 °C yield resins having large amounts of salt splitting capacity and may be undesirable for some applications. Where the liquid mixture is a sugar solution for example, high salt splitting capacity can result in excessive sugar degradation. The haloalkylation temperature is maintained for a time sufficient to substantially complete the haloalkylation reaction, generally at least two and one-half hours.

A suitable haloalkylating agent is any compound capable of allowing formation of enough methylene bridging so that resins prepared therefrom have a salt splitting capacity of at least 5 percent of total exchange capacity for the resin. Examples of suitable haloalkylating agents are bromomethylmethylether and chloromethylmethylether. The amount of haloalkylating agent employed is preferably an amount sufficient to give a weight ratio of haloaklylating agent to the copolymer beads of at least 1.5:1.

Suitable Friedel-Crafts catalysts are acidic metal halides. Examples of suitable catalysts are ferric chloride and aluminum chloride. The amount of catalyst employed is preferably sufficient to give a weight ratio of catalyst to copolymer beads of from 0.1:1 to 0.5:1.

Weak-base functional groups are attached to the haloalkylated copolymer beads by methods known in the art, as is discussed in U.S. Patents 2,642,417; 2,960,480; 2,597,492; 2,597,493; 3,311,602; 2,632,000; 2,632,001 and 2,992,544. Weak-base groups may be attached by heating the haloalkylated beads in the presence of at least a stoichiometric amount of an aliphatic secondary amine. Examples of suitable aliphatic secondary amines are dimethylamine, diethylamine, or dipropylamine. A preferred aliphatic secondary amine is dimethylamine.

Initially, the haloalkylated copolymer beads are swollen with a swelling agent to obtain substantially

uniform amination within the beads. Suitable swelling agents include water, or a mixture of water and an organic solvent that is capable of swelling the halomethylated copolymer beads but is substantially immiscible with water. Examples of suitable organic solvents are methylal, methanol or methylene chloride. The presence of water in the swelling agent allows for continued swelling of the haloalkylated copolymer beads as amination proceeds, since placement of hydrophilic amine groups tends to displace organic solvents from the copolymer beads. The result is more uniform and complete amination. The choice of swelling agent also influences water retention capacity of the weak-base resin. For example, resins prepared using water in the swelling agent generally exhibit a water retention capacity of from 30 to 37 percent, while those prepared using a mixture of water and an organic solvent usually exhibit water retention capacities of from 37 to 50 percent as measured in the free-base form.

The amount of swelling agent required is generally an amount sufficient to substantially completely swell the haloalkylated copolymer beads. In general, an amount sufficient to yield a weight ratio of swelling agent to the haloalkylated copolymer beads of 3:1 is adequate. Where a mixture of water and organic solvents is employed, the weight ratio of water to the organic solvents is preferably from 0.5:1 to 3:1. Swelling is suitably conducted by any means which provides intimate contact between the swelling agent and haloalkylated beads for at least 30 minutes.

Amination is conducted by contacting the swollen haloalkylated beads with the aliphatic secondary amine at a temperature which promotes reactions of the amine with the beads. Amination is advantageously performed at a temperature of from 60 °C to 100 °C, and more preferably from 80 °C to 90 °C for at least one hour. A base, such as sodium hydroxide or sodium carbonate, may be added with the aliphatic secondary amine to minimize side reactions and promote efficient use of the amine compound. Other amination conditions are well known.

After amination, the resulting gel-type, weak-base, anion-exchange resin is converted to its free-base form by contact with a basic solution. By the term "free-base form", it is meant resin wherein hydrohalide molecules present at the weak-base sites after amination are substantially removed therefrom. Suitable basic solutions include alkali metal hydroxides, with a preferred base being sodium hydroxide.

The gel-type, weak-base resin formed advantageously exhibits a water retention capacity ("WRC") of less than 60 percent. Water retention capacity is determined by swelling a weighed amount of resin with water, removing excess water and weighing the fully swollen resin. The resin is then dried on a moisture balance until a constant weight is obtained. Water retention capacity is the ratio of water imbibed to the total combined weight of the resin plus imbibed water. Water retention capacity, on a fully functionalized basis, is advantageously at least 30 percent. Preferred resins have a water retention capacity of at least 32 percent, more preferably at least 38 percent and most preferably from 40 to 45 percent. As used herein, water retention capacity is measured while the weak-base, anion-exchange resin is in the free-base form.

Suitable resins also exhibit a salt splitting capacity of at least 5 percent of total exchange capacity for the resin. A salt splitting capacity of less than 5 percent is undesired, because the resin does not perform efficiently due to limited exchange capacity for weak organic acids. A salt splitting capacity of greater than 50 percent is also undesired, because excessive amounts of base are required to regenerate the resin. Resins having a salt splitting capacity of greater than 35 percent are generally not necessary to achieve the benefits of the invention, and may be undesirable for some applications. For example, a salt splitting capacity of 35 percent or greater can be unsuitable for removing weak organic acids from sugar solutions due to excessive amounts of sugar degradation. Also, it is generally desirable to provide an adequate amount of weak-base functional groups to further demineralize the liquid mixture by removal of strong acids, especially where the liquid mixture is a sugar solution. Accordingly, preferred resins have a salt splitting capacity of from 10 to 33 percent, more preferably from 15 to 30 percent and most preferably from 18 to 27 percent of the total exchange capacity of the resin.

Total exchange capacity, also known as wet volume capacity, is determined by known analytical techniques, such as chloride titration with silver nitrate. Generally, a small, measured amount of the resin is converted to the chloride form by contact with a dilute (5 percent by weight of solution) hydrochloric acid solution. The resin is then converted to the hydroxide form by passing an excess of dilute, i.e., 1N, ammonium hydroxide solution through the resin and the volume of the resin in the hydroxide form is measured. The ammonium hydroxide solution passed through the resin is collected, acidified to a pH of two, and potentiometrically titrated with a standard silver nitrate solution. The weak base capacity is:

$$WBC\ (meq/ml) = meq\ of\ silver\ nitrate \div volume\ of\ resin\ in\ hydroxide\ form.$$

After titration, the resin is acidified with a dilute sulfuric acid solution and heated to a temperature of from 70 to 80°C for five minutes to displace remaining chloride ion from salt splitting sites. The resin is potentiometrically titrated by use of the silver nitrate solution. Salt splitting capacity (SSC) is:

$$SSC\ (meq/ml) = meq\ of\ silver\ nitrate \div volume\ of\ resin\ in\ hydroxide\ form.$$

Total exchange capacity is the sum of weak base capacity and salt splitting capacity. Resins employed in this invention are characterized by a high total exchange capacity. The resin will preferably have a total exchange capacity of at least 1.7 meq/ml, more preferably at least 1.9 meq/ml, and most preferably at least 2.0 meq/ml.

In terms of a dry weight capacity, the resins have at least 2.5 meq/g, preferably at least 4.0 meq/g, more preferably at least 4.5 meq/g, and most preferably at least 5.0 meq/g. Dry weight capacity is measured by known analytical techniques.

The total exchange capacities previously described result in a high operating capacity when the resins are employed in removing weak organic acids. For example, operating capacities realized when removing, i.e., demineralizing, both strong mineral acids and weak organic acids from a sugar-containing solution are preferably at least 25 kgrains/$ft^3$ (1.15 equivalents/liter), and most preferably at least 28 kgrains/$ft^3$ (1.28 equivalents/liter). In contrast, such operating capacities for conventional macroporous weak-base resins are on the order of 23 kgrains/$ft^3$ (1.05 equivalents/liter) or less.

The resin preferably has a volume average particle size from 170 to 600, more preferably from 275 to 500, and most preferably from 300 to 450 $\mu$m. The benefits of this invention are particularly seen with the use of resins having volume average particle sizes in excess of 300 $\mu$m. In addition, the resin preferably has a relatively narrow particle size distribution, with at least 50 volume percent and preferably at least 90 volume percent of the particles having a diameter which is between 0.9 and 1.1 times the average diameter. Volume average particle size may be determined by any one of a number of commercially available instruments designed to make such measurements, such as a Criterion Model PC-320 Particle Size Analyzer available from the HIAC-Royco Company.

In the process of this invention, weak organic acids are separated from liquid mixtures by contact with the weak-base, anion-exchange resin previously described herein. Suitable methods for conducting the separation are those resulting in intimate contact between the liquid mixture and the resin. Examples of suitable methods include fluidized beds, stirred tanks, batch tanks, and cocurrent or countercurrent flow columns. The contact may occur batchwise, semi-batchwise, continuously, or semi-continuously. Preferably, the liquid mixture is contacted with the resin in a continuous system employing a packed ion-exchange column.

The residence time required for contact will depend upon numerous factors, such as the following: (1) the properties of the resin employed; (2) the amount of weak organic acids present in the liquid mixture; (3) the degree of separation desired; (4) the amount of resin employed in the process; (5) the liquid mixture viscosity; (6) in the case of sugar solutions, the concentration of dissolved sugar (also referred to as dissolved solids "ds"); and (7) the temperature at which the contact is conducted. Thus, the residence time employed in most instances is more or less determined empirically. Generally, a residence time of from 0.1 hours (10 bed volumes/hr) to 10 hours (0.1 bed volume/hr), more preferably 0.12 hours (8 bed volumes/hr) to 1 hour (1 bed volume/hr), and most preferably 0.17 hours (6 bed volumes/hr) to 0.5 hours (2 bed volumes/hr), yields acceptable results. The term "bed volume", also abbreviated as "BV" herein, refers to a volume of the liquid mixture being treated which is equal to the volume of the resin employed in a resin bed.

The temperature at which the contact is conducted is one which does not adversely affect either the resin or the liquid mixture being treated. In general, the temperature at which the contact is conducted is limited by the freezing point and viscosity of the liquid mixture being separated, as well as the boiling point of the liquid mixture, and the temperature at which the components of the liquid mixture or the resin itself

begins to decompose. Temperatures from 20 ° C to 100 ° C are generally preferred. In the case where weak organic acids are removed from aqueous sugar solutions, the temperature is suitably from 20 ° C to 90 ° C. The temperature is preferably from 40 ° C to 75 ° C in order to minimize problems associated with solution viscosity, microbial growth, and sugar degradation. In such instances, temperatures above 75 ° C result in an undesirable amount of sugar degradation, while temperatures below 40 ° C are undesired due to high solution viscosity and possible microbial growth.

The concentration of components in the liquid mixture is advantageously in the range of from 1 percent to 100 percent, although it is generally preferred to use as concentrated a feed mixture as possible in order to avoid removing large amounts of solvent from product streams. The feed concentration also depends somewhat on temperature, as highly concentrated liquid mixtures of some materials, such as sugars, tend to be highly viscous at lower temperatures.

The amount of weak organic acids separated from the liquid mixture will depend upon the choice of equipment configuration, the concentration and type of weak organic acids which are to be removed, and the level of separation desired.

The process disclosed herein is characterized by an improved ability to retain weak organic acids without need for frequent regeneration. When employed to demineralize concentrated sugar solutions of both strong mineral acids and weak organic acids, a resin bed can preferably process at least 40 bed volumes, more preferably at least 45 bed volumes, and most preferably at least 50 bed volumes of the sugar solution before exhaustion with respect to weak organic acids occurs. Such operating performance allows for the processing of preferably at least 10 percent, more preferably at least 20 percent, and most preferably at least 30 percent more of the liquid mixture, based on volume of the liquid mixture, when compared to conventionally employed macroporous weak-base resins.

If desired, weak organic acids retained by the resin may be recovered in a free-acid form by elution with an acidic medium. This acidic medium employs an acid which is stronger than the weak organic acid being recovered. Preferred acidic media are aqueous solutions of strong mineral acids like hydrochloric acid, sulfuric acid and phosphoric acid. The concentration of acid in the acidic medium is conveniently from 0.1 N to 1N. Acid concentrations greater than 1N are generally undesired due to contamination of product. Use of an acidic medium retains the weak organic acid in its free-acid form which may be desirable for further processing. If recovery is not desired, the weak organic acids are more conveniently removed from the resin during regeneration with a basic solution.

The amount of acidic medium required will vary widely depending upon the process equipment employed and the concentration of the acid therein. Generally, where a packed ion-exchange column is employed, introducing the acidic medium at a rate of from 0.5 to 5 bed volumes/hr gives acceptable results.

After recovery of the weak organic acids by elution with the acidic medium or exhaustion of the resin where such recovery is not desired, the exchange capacity may be regenerated by contact with a basic solution. It is preferred to elute the weak organic acids and/or regenerate the resin by use of a process that takes advantage of existing equipment available to the producer. Therefore, in the preferred process, the resin is used in a packed column not only to conduct the separation and recovery of the weak organic acids, but also for regeneration. Regeneration is advantageously conducted by contacting the resin with an effective amount of a basic solution sufficient to convert weak-base exchange sites to their free-base form.

The following examples are intended to illustrate the invention and should not be construed to limit the scope of the appended claims. All parts and percentages are by weight and all temperatures are in degrees Celsius ( ° C), unless stated otherwise.

## EXAMPLES 1-7

## PURIFICATION OF SUGAR SOLUTIONS HAVING WEAK ORGANIC ACID CONTAMINANTS

### Resin Preparation

The weak-base, anion-exchange resins employed in Examples 1-7 were prepared prior to use. The procedure used in preparing each resin was substantially similar, except where indicated otherwise.

Copolymer beads employed in Examples 1-7 were prepared by substantially following the seeded polymerization process described in Example 1 of U.S. Patent 4,564,644, as well as column 7, line 3 to column 9, line 53 of the patent. A three liter stainless steel reactor was loaded, under agitation, with 250 grams of seed copolymer particles and 700 grams of water. The seed particles were 0.3 percent cross-linked styrene/divinylbenzene copolymer particles having a volume average particle size of 240 µm. Thereafter, the reactor was charged with a monomer mixture that contains 295 grams of styrene, 11 grams

of a commercially available divinylbenzene mixture, and 0.92 grams of a 50 percent t-butyl peroctoate solution with 0.46 grams of t-butyl perbenzoate as polymerization initiators. The divinylbenzene mixture was obtained from The Dow Chemical Company and consists of 55 percent divinylbenzene, with the balance of the divinylbenzene mixture being essentially ethylvinylbenzene. The seed copolymer particles were then allowed to imbibe the monomers and initiator for a 30-minute period.

Thereafter, an additional 300 grams of water, 20 grams of a 1 percent sodium lauryl sulfate solution, three grams of gelatin, and three grams of a 58 percent aqueous sodium dichromate solution were added to the reactor. The reactor was sealed, purged with nitrogen, and the contents heated to a temperature of 78° C which was maintained for about two hours to obtain partial conversion of monomer within the seed copolymer particles.

After two hours, pure styrene was continuously fed to the reactor at a rate of 2.1 grams per minute over three and one-half hours. The reactor contents were maintained at 78° C during addition of the styrene feed and, thereafter, for another six and one-half hours. The polymerization was concluded by heating the reactor contents to 110° C which was maintained for two hours. The resulting copolymer beads had a volume average particle size of 373 μm and an apparent cross-link density, as measured by toluene swell techniques, of 1.9 weight percent divinylbenzene.

The copolymer beads employed in each example were chloromethylated by first charging a three liter, three-necked, round-bottom flask with 250 grams of the copolymer beads and 1500 milliliters of chloromethyl methyl ether ("CMME"). The flask was equipped with mechanical agitation, a heating mantle, a reflux condenser, and an addition funnel. Agitation was initiated when the copolymer beads are admixed with the CMME and maintained until chloromethylation was complete. The copolymer beads were first allowed to swell by contact with the CMME for 30 minutes at a temperature of 10° C. Thereafter, 90 grams of ferric chloride in powder form was added to the flask via the addition funnel in small, even amounts over a two minute period. The flask was then heated to the chloromethylation reaction temperature ("$T_{cm}$") at a steady rate of increase over a 30-minute period. The reaction temperature was maintained for 100 minutes until the reaction was substantially complete and the flask contents were finally allowed to cool to room temperature. For Example 1, the $T_{cm}$ was 50° C. For Examples 2, 3, 4, and 5, the $T_{cm}$ was 54° C. For Examples 6 and 7, the $T_{cm}$ was 57° C.

The chloromethylated beads were removed from the flask by first adding 1000 milliliters of methanol to the flask to chemically destroy residual CMME. The chloromethylated copolymer beads were then recovered from the flask, washed with methanol to purge any reaction byproducts and residual catalyst, and stored in methanol until further use.

The degree of methylene bridging was determined by first converting small portions of the chloromethylated copolymer beads to a strong base resin by amination with trimethylamine. The relative amount of methylene bridging in the copolymer beads may be determined by comparing the water retention capacity ("WRC") of the copolymer beads when functionalized with strong-base groups. Comparison of WRC values when the copolymer beads are functionalized with weak-base groups is difficult, as amine bridging also impacts WRC and DWC. In general, strong-base resins having a higher degree of methylene bridging will exhibit a lower WRC than similar resins having a smaller amount of methylene bridging.

To convert the copolymer beads to a strong-base resin, 10 gram samples of the copolymer beads chloromethylated at 50° C, 54° C, and 57° C, respectively, were each separately placed in three small, capped bottles. 50 milliliters of methylal was added to each bottle and the chloromethylated copolymer beads were allowed to swell for 15 minutes. A 50 milliliter portion of a 24 percent by weight aqueous solution of trimethylamine was added to each bottle and allowed to stand at room temperature overnight for 16 hours. Thereafter, the resulting strong-base resins were each washed with water and analyzed for WRC as previously described. Resin prepared from copolymer beads chloromethylated at a temperature of 50° C exhibited a WRC of 63.4 percent in the chloride form. Resin prepared from copolymer beads chloromethylated at a temperature of 54° C exhibited a WRC of 55.7 percent. Resin prepared from copolymer beads chloromethylated at a temperature of 57° C exhibited a WRC of 43.2 percent. This WRC data shows that resin prepared from copolymer beads chloromethylated at lower temperatures, i.e., 50° C, exhibit a high WRC and have a low degree of methylene bridging. In contrast, resin prepared from copolymer beads chloromethylated at higher temperatures, i.e., 57° C, exhibit a lower WRC with a correspondingly higher degree of methylene bridging relative to the resin prepared at 50° C.

The weak-base resins of the present invention were prepared by aminating the chloromethylated copolymer beads with dimethylamine. A 500 milliliter Paar pressure reactor was loaded with measured amounts of the chloromethylated copolymer beads, a 40 percent by weight aqueous solution of dimethylamine (DMA), and in some examples, methylal (MeAl). In Example 4, a 10.6 gram measured

amount of base, i.e., sodium carbonate monohydrate, was added to the reactor. The amount of materials charged to the Paar reactor in each example is summarized in Table I.

TABLE I

| Resin Preparation Data For Examples 1-7 | | | | | |
|---|---|---|---|---|---|
| Example No. | $T_{cm}$ (°C) | Copolymer Beads (ml) | DMA (ml) | MeAl (ml) | $Na_2CO_3$ (grams) |
| 1 | 50 | 30 | 180 | 100 | -0- |
| 2 | 54 | 30 | 180 | -0- | -0- |
| 3 | 54 | 30 | 180 | 100 | -0- |
| 4 | 54 | 30 | 30 | 155 | 10.6 |
| 5 | 54 | 30 | 40 | 155 | -0- |
| 6 | 57 | 30 | 180 | -0- | -0- |
| 7 | 57 | 30 | 180 | 100 | -0- |

Amination of the chloromethylated beads was initiated by heating the contents of the Paar reactor at a constant rate to a temperature of 80°C over a 30-minute period. Thereafter, the reactor contents were maintained at this temperature for five hours to substantially complete the reaction. The reactor was then cooled to room temperature by immersion in an ice bath.

Excess dimethylamine was removed by adding 200 milliliters of a 1N aqueous hydrochloric acid solution to the Paar reactor. The resulting resin beads were recovered from the reactor and washed with deionized water. The resin beads were converted to the free-base form by contact with approximately 200 milliliters of a 1N aqueous solution of sodium hydroxide in a beaker for about two hours.

Each resin was analyzed by standard analytical methods, as previously described herein, to determine WRC, DWC, weak base capacity (WBC), salt splitting capacity (SSC), and total exchange capacity (TEC). The properties for each resin sample appear in Table I(a).

# TABLE I(a)

## Resin Property Data for Examples 1-7 and Comparative Example A

| Example No. | WRC (%) | WBC (meq/-ml) | SSC (meq/ml) | TEC meq/ml | S.S.C. (% of TEC) | DWC meq/g |
|---|---|---|---|---|---|---|
| 1 | 42.1 | 1.91 | 0.23 | 2.14 | 10.5 | 5.73 |
| 2 | 34.3 | 2.41 | 0.27 | 2.68 | 10.8 | 6.18 |
| 3 | 41.0 | 1.67 | 0.39 | 2.06 | 19.1 | 5.24 |
| 4 | 45.9 | 1.39 | 0.37 | 1.76 | 21.2 | 5.16 |
| 5 | 45.4 | 1.35 | 0.61 | 1.96 | 31.0 | 5.39 |
| 6 | 42.1 | 1.55 | 0.57 | 2.12 | 27.0 | 5.49 |
| 7 | 47.5 | 1.23 | 0.61 | 1.84 | 33.1 | 5.22 |
| A | 56.5 | 1.11 | 0.30 | 1.41 | 21.3 | * |

*Not determined.

Purification Of Liquid Mixtures Containing Weak Organic Acids

The resins were each individually used to purify, i.e., demineralize, a concentrated glucose solution which simulates sugar solutions employed in producing HFCS sweeteners. The procedure followed for evaluating each resin was substantially repeated for Examples 1-7.

The glucose solution was prepared by placing 10.76 pounds (4.88 kilograms) of glucose crystals into a flask and adding sufficient deionized water to make a 4 liter volume. The resulting mixture was heated to a temperature of from 40 ° C to 50 ° C with agitation to assist with placing the glucose into solution. The resulting solution was then contaminated with both strong mineral acids and weak organic acids by adding amounts of a 37 weight percent hydrochloric acid solution, a 98 weight percent sulphuric acid solution, a 85 wieght percent lactic acid solution, and a 99 weight percent acetic acid solution. The amounts were sufficient to yield a glucose solution having the following concentrations:

| | |
|---|---|
| HCl | 0.0071 meq/ml |
| $H_2SO_4$ | 0.0093 meq/ml |
| Lactic acid | 0.0056 meq/ml |
| Acetic acid | 0.0036 meq/ml |
| Total acidity | 0.0256 meq/ml |

The glucose solution had a Brix degree of about 49. This glucose solution was employed for Examples 1, 3, 4, 6, and 7. Using substantially the same procedure, a second glucose solution was prepared for use in

Example 2 and a third glucose solution was prepared for use in Example 5. The second glucose solution had 0.0194 meq/ml of strong acids and 0.0092 meq/ml of weak organic acids for a total acidity of 0.0286 meq/ml. The third glucose solution had 0.0184 meq/ml of strong acids and 0.0092 meq/ml of weak organic acids for a total acidity of 0.0276 meq/ml. The difference in acidity was due to unavoidable error associated with preparing additional glucose solution.

Prior to use, each resin sample was preconditioned by a cross-regeneration procedure prescribed by the United States Food & Drug Administration. The procedure removes residual impurities from the resin prior to its use in food processing applications. Each resin sample was loaded into a column wherein a 5 to 7 percent by weight aqueous sulphuric acid solution was passed through the resin until column effluent measured pH 1. Thereafter, deionized water was passed through the resin until column effluent measured pH 3. A 4 percent by weight aqueous sodium hydroxide solution was then passed through the resin until column effluent reached pH 14. Finally, deionized water was passed through the resin until a neutral pH was obtained.

A 8.65 milliliter portion of the preconditioned resin sample was loaded into a 10 millimeter inside diameter by 150 millimeter long cylindrical, glass, ion-exchange column equipped with Teflon frits and connectors. The ion-exchange column was obtained from The Omnifit Company. The ion-exchange column was thereafter connected by tubing to the apparatus illustrated in Fig. 1.

Referring to Fig. 1, the flask 10 holding the glucose solution was placed on a hotplate 15. The hotplate maintained the glucose solution at a temperature of about 40 °C to assist in keeping solids in solution. The hotplate was also equipped to provide agitation by magnetically operating a stir bar 18. A peristaltic pump 30 pumped glucose solution at a rate of 37.2 milliliters per hour (4.3 BV/hr) through tubing 20 and 40 to the ion-exchange column 60. The ion-exchange column 60 was submerged in a temperature-controlled water bath 50 wherein the temperature of the bath and column was maintained at 50 °C. About 3 meters of tubing 40 was also submerged in the water bath, as is shown generally by the numeral 55 in Fig. 1, to assist in maintaining the ion-exchange column temperature at 50 °C. Agitation of the water bath 50 was provided by an overhead mechanical stirrer 70.

Treated glucose solution passed through tubing 85 to a second water bath 80 which had submerged therein a Toa Dempa Model #HM-585 pH meter 90 and a Toa Dempa Model #CM-8ET conductivity meter 100. Both the pH and conductivity meters were temperature compensated. The water bath 80 was maintained at ambient temperature to minimize measurement error. Tubing 88 connects the pH meter 90 with the conductivity meter 100. Electrical signals from the pH and conductivity meters were carried by leads 105 to chart recording equipment (not shown) where the pH and conductivity of the treated glucose solution was continuously monitored and charted. The glucose solution was eluted through the ion-exchange column until effluent conductivity reaches 50 microsiemens (µS) which indicated breakthrough of strong mineral acids into column effluent and exhaustion of the resin to strong acids. Effluent from the apparatus exited via tube 130.

The results for Examples 1-7 are given in Table II.

# TABLE II

## Resin Operating Data for Examples 1-7 and Comparative Example A

| Sample No. | Run Length[1] (BV) | Organic Run Length[2] (BV) | Total Available Capacity[3] (meq.) | Retained Strong Acid[4] (meq) | Retained Weak Acid[5] (meq) | Efficiencies (Percent) | | | | Operating Capacity[10] (eq/l) |
|---|---|---|---|---|---|---|---|---|---|---|
| | | | | | | Total Exchange Cap[6] | Total WBC[7] | Total SSC[8] | Total DWC[9] | |
| 1 | 78.1 | 50.4 | 17.30 | 11.08 | 4.01 | 93.5 | 67.1 | 201.5 | 34.9 | 1.28 |
| 2 | 69.5 | 44.2 | 17.20 | 11.67 | 3.52 | 74.2 | 56.0 | 150.4 | 32.2 | 1.35 |
| 3 | 80.7 | 53.5 | 17.87 | 11.45 | 4.26 | 100.3 | 79.2 | 126.4 | 39.5 | 1.32 |
| 4 | 63.4 | 45.6 | 13.72 | 8.67 | 3.63 | 90.1 | 72.1 | 113.4 | 30.7 | 1.00 |
| 5 | 60.1 | 42.2 | 14.34 | 9.56 | 3.36 | 84.6 | 81.9 | 63.6 | 30.8 | 1.10 |
| 6 | 84.2 | 56.8 | 18.63 | 11.94 | 4.52 | 101.6 | 89.0 | 91.7 | 39.2 | 1.38 |
| 7 | 72.0 | 47.7 | 15.95 | 10.22 | 3.80 | 100.2 | 96.1 | 72.0 | 35.4 | 1.18 |
| A | 64.2 | 39.6 | 14.22 | 9.11 | 3.15 | 116.6 | 94.9 | 121.2 | * | 1.05 |

*Not determined

(1)Run length is the number of bed volumes of glucose solution passing through the column until effluent conductivity reaches 50 microsiemens (µS). The number of bed volumes is obtained by dividing the volume of passed glucose solution (in milliliters) by the volume of resin employed in the column, i.e., 8.65 milliliters (ml).

(2)Organic Run Length is the number of bed volumes of glucose solution passing through the resin bed until effluent conductivity reaches 5.0 µS indicating passage of weak organic acids from the column. The number of bed volumes is obtained by dividing the volume of glucose solution passed (in milliliters) by the volume of the resin bed, i.e., 8.65 ml.

(3)Total Available Capacity, in milliequivalents (meq), is obtained by multiplying the volume of glucose solution passing through the column (the amount used in (1) to calculate Run Length) by the concentration of weak organic acids and strong mineral acids in the glucose solution.

(4)Retained Strong Acids, in meq, is calculated by multiplying the volume of glucose solution passing through the column (the amount used in (1) to calculate Run Length) by the concentration of strong mineral acids.

(5)Retained Weak Acids, in meq., is calculated by multiplying the volume of glucose solution passing through the column until the effluent conductivity reaches 5.0 µS (the volume in milliliters as described in (2) to calculate Organic Run Length) by the concentration of weak organic acids.

(6)Total Exchange Capacity (percent efficiency) is

$$\frac{\text{Total Available Capacity}}{\text{TEC * 8.65 ml}} \text{ * 100.}$$

(7)Total WBC (percent efficiency) is

$$\frac{\text{Retained Strong Acids}}{\text{WBC * 8.65 ml}} \text{ * 100.}$$

(8)Total SSC (percent efficiency) is

$$\frac{\text{Retained Weak Acids}}{\text{SSC * 8.65 ml}} \text{ * 100.}$$

(9)Total DWC (percent efficiency) is

$$\frac{\text{Retained Strong Acids + Retained Weak Acids}}{\text{DWC * weight of the resin sample (in grams)}} \text{ * 100.}$$

(10)Operating Capacity, in terms of equivalents per liter (eq/l) is:

$$\frac{\text{Run Length (ml) * Strong Mineral Acid Concentration (meq/ml)* 0.9989}}{\text{volume of resin employed (ml)}}.$$

Comparative Example A

The procedure of Examples 1-7 was substantially repeated, except a macroporous resin conventionally used to purify sugar solutions of strong mineral acid and weak organic acid contaminants was used in the

ion-exchange column. The resin was Diaion® WA-30, a macroporous, weak-base, anion-exchange resin commercially available from Mitsubishi-Kasei Company, Ltd. The physical properties for this resin were measured as previously described and are also given in Table I(a) for comparison therewith. Column evaluation results are similarly listed in Table II.

The results indicate that the gel weak-base, anion-exchange resins of the present invention have a much higher capacity for removing weak organic acids, i.e., lactic acid and acetic acid, when compared to macroporous weak-base, anion-exchange resins conventionally employed in purification of glucose solutions. This improved weak acid removal capacity is exemplified by the higher values for Organic Run Length. Although Examples 4 and 5 had roughly comparable operating capacities (these operating capacities are for demineralization, i.e., they are numbers based on removal of strong acids) in comparison with Comparative Example A, the resins employed in Examples 4 and 5 exhibited significant improvement in Organic Run Length.

The improved operating performance is further illustrated by reference to Fig. 2. Fig. 2 shows a series of curves, each representing a resin sample, plotting pH of the treated glucose solution versus the amount of bed volumes passing through the ion-exchange column. The purely dotted line represents results for Comparative Example A, the purely dashed line represents results for Example 3, the line having alternating single dots and dashes represents results for Example 1, and the line having two dots alternating with a dash represents results for Example 7. Comparative Example A shows a rapid drop in pH after passing about 31 bed volumes of glucose solution through the ion-exchange column. The drop in pH indicates passage of weak organic acids into column effluent and, thus, represents exhaustion of the resin's capacity to remove such acids. In contrast, resins employed in Examples 1, 3, and 7 result in pH drops after passage of from about 43 bed volumes (Example 7) to about 51 bed volumes (Example 3) of glucose solution through the column, an improvement of from 38 percent (Example 7) to 64 percent (Example 3) over the conventionally employed macroporous resin. Thus, resins of Examples 1, 3, and 7 are expected to require less frequent regeneration with the desired improvement in overall process efficiency and decreased operating costs.

## EXAMPLE 8

## RECOVERY OF CITRIC ACID

In this example, a weak organic acid, i.e., citric acid, was recovered from a simulated process stream sample. The sample was prepared by dissolving 12 grams of citric acid, 5 grams of fructose, and 2 grams of sodium chloride in 100 milliliters of deionized water.

The resin employed was prepared on production-scale by generally following the procedure described in Example 1, except the $T_{cm}$ was 52°C and the copolymer beads had an apparent crosslink density of three weight percent of divinylbenzene.

A 50 milliliter portion of the resin was loaded into a vertically oriented, glass, ion-exchange column having an inside diameter of 1.5 centimeters and a height of 30 centimeters. A small, i.e., approximately 3 milliliter, space at the top of the column was retained for bed expansion during operation.

A peristaltic pump was used initially to rinse the resin with deionized water at a flow rate of 2 milliliters per minute (2.4 BV/min). Column effluent was continuously monitored by use of a UV spectrophotometer until a constant reading was obtained at 220 nm. Thereafter, 40 milliliters of the sample was eluted through the resin at the same flow rate. After initial displacement of water in the column, the spectrophotometer indicated a sharp increase in absorbence. A sample of column effluent was taken at this point and analyzed by high performance liquid chromatography ("HPLC") to determine the presence of citric acid, fructose, and sodium chloride therein. The HPLC analysis indicated the presence of sodium chloride, fructose, and about 11 percent of the citric acid introduced to the column.

After eluting the simulated waste stream sample, the column was again rinsed with deionized water until a constant reading on the UV spectrophotometer was obtained. Thereafter, a 0.4 N sulfuric acid solution was eluted at the same flow rate. The spectrophotometer recorded another sharp increase in absorbence. Samples of column effluent were again taken and analyzed by HPLC. The analysis indicated the presence of a substantial amount of citric acid in column effluent during elution with the acid solution, but substantially no sodium chloride or fructose.

The results of Example 8 indicate that the resin selectively retains the weak organic acid, while at the same time allowing other components of the solution to pass through the column. The retained acids may then be recovered by eluting the resin with an acidic medium, i.e., the 0.4 N sulfuric acid solution. After elution, the weak organic acids eluted by the acidic medium may be reacted in a subsequent process step,

or recovered in a more purified form by conventional unit operations, such as distillation or evaporation.

EXAMPLE 9

RECOVERY OF LACTIC ACID

Example 8 was substantially repeated using a simulated process stream sample containing lactic acid and dextrose. The sample was prepared by dissolving 10 grams of lactic acid and 5 grams of dextrose in 100 milliliters of deionized water.

The resin in the ion-exchange column was rinsed with deionized water until the UV spectrophotometer indicates a constant reading at 215 nm. Thereafter, 50 milliliters of the sample was eluted through the resin at the 2.0 milliliter per minute flow rate. After initial displacement of water in the column, the spectrophotometer indicated a sharp increase in absorbence. A sample of column effluent was taken at this point and analyzed by HPLC. The analysis indicated the presence of dextrose and about 18 percent of the lactic acid introduced to the column.

After eluting the aqueous solution through the column, the column was again rinsed with deionized water until a constant reading on the spectrophotometer was obtained. Thereafter, a 0.1 N sulfuric acid solution was eluted through the column at the same flow rate. The spectrophotometer records another sharp increase in absorbence. Samples of column effluent were again taken and analyzed by HPLC. The analysis indicated the presence of a substantial amount of lactic acid in column effluent and substantially no dextrose.

EXAMPLES 10-12

RECOVERY OF OTHER WEAK ORGANIC ACIDS

Examples 10-12 illustrate that the present invention may be used to recover other low molecular weight weak organic acids.

Resin employed in Examples 10-12 was prepared as in Example 8.

Aqueous solutions of various weak organic acids having a concentration, in each instance, of 1 milligram per liter were provided. The weak organic acids are: in Example 10 succinic acid ($C_4H_6O_4$), in Example 11 fumaric acid ($C_4H_4O_4$), and in Example 12 malic acid ($C_4H_6O_5$). The aqueous solutions were prepared by adding a 1 milligram amount of an acid to a volumetric flask and, thereafter, making the volume of the flask up to 1 liter by adding deionized water.

In each example, a portion of each weak organic acid solution was passed through a small syringe column loaded with the resin to evaluate retention of the acids and their subsequent recovery by elution with an acidic medium. The procedure followed for each example was substantially similar. The small syringe column was obtained commercially through Alltech Associates, Inc. and is a 8 milliliter polyethylene tube equipped with polypropylene frits. The resin was transferred to a graduated cylinder with tapping until a constant volume of 4 milliliters was obtained and, thereafter, the resin was placed into the syringe column. A different syringe column and resin sample was used for each example.

The syringe column loaded with resin was initially washed with a 50 milliliter amount of deionized water by gravity feed. A 5 milliliter portion of each weak organic acid solution was then passed through the syringe column. The syringe column was then washed with 15 milliliters of deionized water. Thereafter, a 15 milliliter portion of a 1N aqueous sulfuric acid solution was passed through the syringe column. The sulfuric acid solution eluted from the syringe column was collected and analyzed by HPLC to determine the presence of the weak organic acids. The analysis indicates, in each example, a substantial amount of the weak organic acid was eluted by the sulfuric acid solution.

## Claims

1. A process for separating lower molecular weight weak organic acids from a liquid mixture containing them comprising contacting the liquid mixture with a gel-type, weak-base, anion-exchange resin having a salt splitting capacity of at least 5 percent of total exchange capacity to selectively retain the weak organic acids, the gel-type, weak-base, anion-exchange resin being derived from copolymer beads prepared by polymerizing at least one monovinyl aromatic monomer with a cross-linking monomer, the cross-linking monomer being present in an amount sufficient to yield copolymer beads having an apparent cross-link density of less than 4 weight percent as measured by toluene swell techniques, the

cross-linked copolymer beads being post-polymerization cross-linked in the presence of a Friedel-Crafts catalyst.

**2.** A process as claimed in Claim 1 wherein the lower molecular weight weak organic acid is acetic acid, lactic acid, gluconic acid, glutaric acid, glutamic acid, formic acid, malic acid, maleic acid, fumaric acid, citric acid, or mixtures thereof.

**3.** A process as claimed in claim 1 or Claim 2 wherein the liquid mixture is selected from a sugar solution or a fermentation broth.

**4.** A process as claimed in any one of the preceding claims wherein the monovinyl armomatic monomer is styrene, a styrene derivative, vinyltoluene, vinylbenzyl chloride, vinylbenzyl alcohol, or vinylnaphthalene and the crosslinking monomer is divinylbenzene.

**5.** A process as claimed in any one of the preceding Claims wherein the copolymer beads are prepared by a multi-staged polymerization process.

**6.** A process as claimed in any one of the preceding Claims wherein post-polymerization cross-linking comprises swelling the copolymer beads with a haloalkylating agent in the presence of a Friedel-Crafts catalyst and thereafter maintaining the swollen copolymer beads at a temperature in the range of from 46°C to 59°C for a time sufficient to substantially complete reaction of the haloalkylating agent and thereby obtain haloalkylated copolymer beads.

**7.** A process as claimed in Claim 6 wherein the haloalkylating agent is chloromethylmethylether.

**8.** A process as claimed in Claim 6 or Claim 7 wherein the weakbase, anion-exchange resin is prepared by swelling the haloalkylated copolymer beads with a swelling agent, and aminating the swollen, haloalkylated copolymer beads with an aliphatic secondary amine.

**9.** A process as claimed in any one of Claims 6 to 8 wherein the swelling agent is water, or a mixture of water and an organic solvent, the organic solvent being capable of swelling the haloalkylated copolymer beads and substantially immiscible with water.

**10.** A process as claimed in Claim 8 wherein the aliphatic secondary amine is dimethylamine.

**11.** A process as claimed in any one of the preceding Claims further comprising recovering the retained weak organic acids for eluting the anion-exchange resin with an effective amount of an acidic medium.

**12.** A gel-type, weak-base, anion-exchange resin comprising a copolymer bead matrix having a core/shell morphology, the copolymer bead matrix comprising at least one monovinyl aromatic monomer and a cross-linking monomer in proportions sufficient to yield a copolymer bead having an apparent cross-link density of less than 4 weight percent as determined by toluene swell techniques, the copolymer bead matrix being post-polymerization cross-linked in the presence of a Friedel-Crafts catalyst and functionalized by amination with an aliphatic secondary amine, the resin having a salt splitting capacity of at least 5 percent of total exchange capacity for the resin.

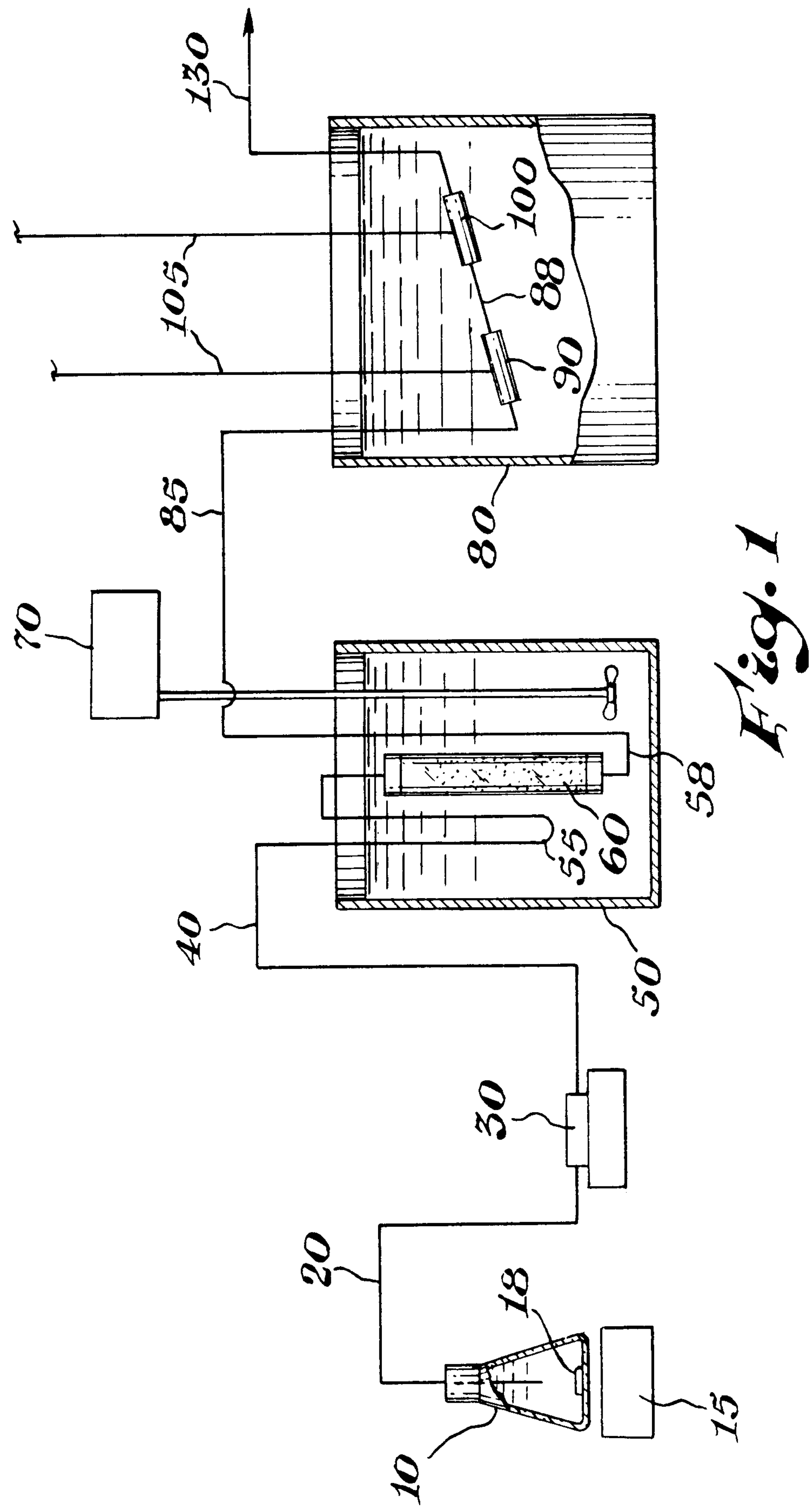


Fig. 1

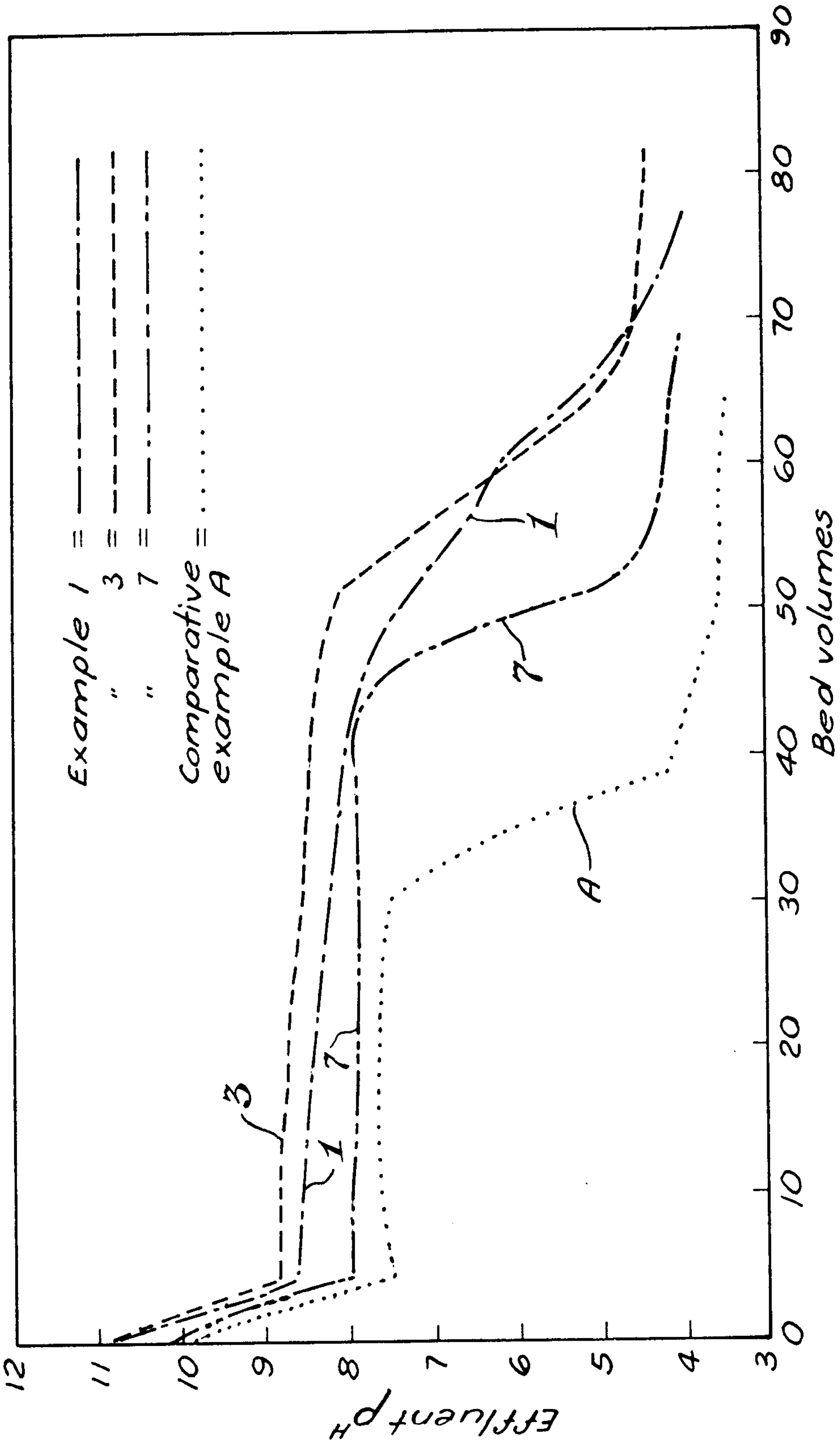
Example 1 =
" 3 =
" 7 =
Comparative example A =
Effluent pH
Bed volumes
0
10
20
30
40
50
60
70
80
90
3
4
5
6
7
8
9
10
11
12
1
3
7
A

Fig. 2

European Patent Office

# EUROPEAN SEARCH REPORT

Application Number

**EP 91 30 8501**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | WO-A-8 908 718 (THE DOW CHEMICAL CO.)<br>* page 11, line 25 - line 35 *<br>* page 30 - page 32; claims 1-19 * * | 1-11 | B 01 J 41/04<br>B 01 J 41/14<br>C 13 D 3/14 |
| A | US-A-3 982 956 (SCHOENROCK)<br>* column 2, line 53 - line 59 *<br>* column 3, line 18 *<br>* column 4; claims 1-3 * * | 1,3,4 | |
| A | FR-A-2 307 039 (PFEILER AND LANGEN)<br>* page 2, line 1 - line 7 *<br>* page 9, line 29 - line 32 *<br>* page 14, line 32 - line 37 *<br>* page 22 - page 23; claims 1-12 * * | 1-4,11 | |
| A | EP-A-0 167 957 (HOECHST)<br>* page 2, line 20 - page 4, line 16 * * | 1,2 | |
| A | US-A-4 871 397 (STEVENS)<br>* column 5 - column 6; claims 1-20 * * | 1-12 | **TECHNICAL FIELDS SEARCHED (Int. Cl.5)** |
| A | US-A-3 153 049 (MELIS) | | |
| D,X | US-A-4 564 644 (HARRIS)<br>* column 18 - column 20; claims 1-20 * * | 12 | B 01 J<br>C 13 D |

The present search report has been drawn up for all claims

| Place of search | Date of completion of search | Examiner |
|---|---|---|
| The Hague | 11 February 92 | WENDLING J.P. |

**CATEGORY OF CITED DOCUMENTS**

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document